# EUROPÄISCHE PATENTANMELDUNG

(11) **EP 1 465 106 A1**
(43) Veröffentlichungstag der Anmeldung: **06.10.2004**
(21) Anmeldenummer: 03007784.6
(22) Anmeldetag: 04.04.2003
(51) Int. Cl.: G06T 1/00

(54) **Verfahren und Bildverarbeitungseinheit zur schnellen Auswertung digitaler Bilddaten**

(71) Anmelder: Automation Technology GmbH, 22946 Trittau (DE)
(72) Erfinder: Wandelt, Michael, 21493 Schwarzenbek (DE); Kasper, André, 22946 Trittau (DE)
(74) Vertreter: Jaeschke, Rainer, Dipl.-Ing.

(57) **Zusammenfassung**

Die Erfindung betrifft ein Verfahren und eine Bildverarbeitungseinheit zum Erfassen wenigstens einer Linie oder wenigstens eines Bereichs, die beziehungsweise der auf einem lichtempfindlichen Sensor abgebildet wird, der eine Vielzahl von in einer Matrix mit Zeilen und Spalten angeordneten Pixel, deren Daten zeilenweise ausgegeben werden, und wenigstens zwei und vorzugsweise mehrere parallele Ausgänge aufweist, um taktweise die Pixeldaten mehrerer Pixel einer Zeile parallel auszugeben. Gemäß der Erfindung wird vorgeschlagen, dass die parallel ausgelesenen Pixeldaten des lichtempfindlichen Sensors durch wenigstens zwei und vorzugsweise mehrere Bildverarbeitungselemente parallel verarbeitet werden, dass in denselben Bildverarbeitungselementen jeweils die Pixeldaten derselben Spalten verarbeitet werden, dass zumindest die Daten des oder der Pixel gespeichert werden, durch die ein Linien- oder Bereichsabschnitt in einer Spalte gekennzeichnet ist, und das am Ende des Auslesens der Daten der Pixel des Sensors nur die gespeicherten Daten des oder der Pixel der Spalten ausgegeben werden.

## Beschreibung

Die Erfindung betrifft ein Verfahren und eine Bildverarbeitungseinheit zum Erfassen wenigstens einer Linie oder wenigstens eines Bereichs, die beziehungsweise der auf einem lichtempfindlichen Sensor abgebildet wird, der eine Vielzahl von in einer Matrix mit Zeilen und Spalten angeordneten Pixel, deren Daten zeilenweise ausgegeben werden, und wenigstens zwei und vorzugsweise mehrere parallele Ausgänge aufweist, um taktweise die Pixeldaten mehrerer Pixel einer Zeile parallel auszugeben.

Solche Verfahren und Bildverarbeitungseinheiten zum Erfassen von Linien werden beispielsweise im sogenannten Lichtschnitt-Triangulationsverfahren angewendet. Hier wird ein Lichtfächer beispielsweise einer LaserLichtquelle auf das zu vermessende Objekt projiziert. Der Verlauf der auf dem Objekt erzeugten Lichtlinie wird mittels eines in einem Winkel hierzu angeordneten lichtempfindlichen Sensors erfasst. Durch eine relative Bewegung des Objekts senkrecht zum Lichtlinie kann die gesamte Oberflächenkontur des Objekts erfasst werden.

Für eine kontinuierliche Objekterfassung, beispielsweise beim Überprüfen von Strangpressprofilen oder für eine stückweise Kontrolle von Objekten, ist es erforderlich, in kurzer Zeit beziehungsweise in kurzer Zeitfolge eine Vielzahl derartiger Linien zu erfassen und zu der gesamten Kontur zusammen zu setzen. Der Linienverlauf wird dabei häufig durch einen matrixförmigen Sensor erfasst, der eine Vielzahl von Pixeln aufweist, die in Zeilen und Spalten angeordnet sind. Zur Zeit sind Sensoren verfügbar, die 1.024 x 1.024 Pixel aufweisen.

Nach der erfolgten Belichtung werden die Daten der einzelnen Pixel zeilenweise ausgelesen. Dies bedeutet, dass mit einem Pixel in einer Ecke angefangen wird, und taktweise zunächst die benachbarten Pixel und anschließend die Pixel der darunter liegenden Zeile ausgelesen werden. Es ist offensichtlich, dass hierfür einige Zeit in Anspruch genommen wird. Es ist daher bekannt, in einem Zyklus nicht nur ein Pixel, sondern eine Vielzahl von nebeneinander liegenden Pixeln parallel auszulesen. Beispielsweise sind Sensoren bekannt, die 8 oder sogar 16 parallele Ausgänge haben. Bei 16 Ausgängen wären nicht 1.024 separate Schritte erforderlich, vielmehr könnten in 64 Schritten die 1.024 Pixel einer Zeile ausgelesen werden. Es liegt auf der Hand, dass hierdurch die Auslesezeit deutlich reduziert werden kann.

Auch wenn die Auslesezeit durch parallele Ausgänge des Sensors verkürzt werden kann, muss nach wie vor die gleiche Datenmenge zur Erfassung der Linie beziehungsweise des Linienverlaufs ausgewertet werden. Grundsätzlich wäre es bei einem solchen Sensor mit 1.024 x 1.024 Pixel erforderlich, Daten von über 1 Million Pixel auszuwerten.

Insbesondere bei der Erfassung einer Linie im Lichtschnitt-Triangulationsverfahren werden jedoch tatsächlich nur einige Pixel belichtet sein. So werden bei einer Linie, deren Dicke auf 1 Pixel abgebildet wird und die sich von der einen Seite Ende zu der anderen Seite des Sensors im wesentlichen linear erstreckt, im optimalen Falle lediglich 1.024 Pixel belichtet. Es liegt auf der Hand, dass bei einer Auswertung aller 1.048.576 Pixel unnötig viel Rechenzeit in Anspruch genommen wird.

Hinzu kommt, dass der lichtempfindliche Sensor einerseits und die Datenverarbeitungsanlage andererseits in der Regel räumlich getrennte Einheiten sind. Die große Datenmenge muss daher zwischen den Einheiten übertragen werden. Auch hierfür ist relativ viel Zeit erforderlich. Es wird daher eine relativ lange Zeit zum Erfassen einer einzigen Konturlinie benötigt.

Aus der WO 95/24793 ist es bekannt, jedem Pixel eine programmierbare Verarbeitungseinheit zuzuordnen. Diese wird direkt auf den Sensorchip implementiert. Hierdurch wird zwar erreicht, dass die Auswertung eines Pixels relativ schnell und ohne das Erfordernis einer Datenübertragung erfolgen kann. Allerdings ist ein derartiger Sensor sehr aufwändig aufgebaut. Für verschiedene Anwendungen, beispielsweise für unterschiedliche Auflösungen und/oder Sensorgrößen und/oder optische Kennlinien, müsste daher stets ein neuer Sensorchip entwickelt werden.

Der Erfindung liegt daher die Aufgabe zugrunde, ein Verfahren und eine Bildverarbeitungseinheit der eingangs geschilderten Art so auszubilden, dass eine schnellere und effizientere Datenverarbeitung insbesondere zur Erfassung einer abgebildeten Linie möglich ist.

Die Aufgabe wird gemäß der Erfindung dadurch gelöst, dass die parallel ausgelesenen Pixeldaten des lichtempfindlichen Sensors durch wenigstens zwei und vorzugsweise mehrere Bildverarbeitungselemente parallel verarbeitet werden, dass in denselben Bildverarbeitungselementen jeweils die Pixeldaten derselben Spalten verarbeitet werden, dass zumindest die Daten des oder der Pixel gespeichert werden, durch die ein Linien- oder Bereichsabschnitt in einer Spalte gekennzeichnet ist, und das am Ende des Auslesens der Daten der Pixel des Sensors nur die gespeicherten Daten des oder der Pixel der Spalten ausgegeben werden. Durch die parallele Verarbeitung der parallel ausgegebenen Daten wird eine entsprechend der Anzahl der parallel arbeitenden Bildverarbeitungselemente verkürzte Rechenzeit benötigt. Es ist vorgesehen, dass in einem Bildverarbeitungselement stets die Pixel derselben Spalte verarbeitet werden, so dass ein sicheres Erfassen und ein sicheres Zuordnen der Pixel, die zu einer Linie oder zu einem zu erfassenden Bereich gehören, möglich ist.

Es müssen hier nicht zwingend die Daten aller Pixel des Sensors ausgelesen werden. Vielmehr können auch ein oder mehrere Teilbereiche des Sensors definiert werden, innerhalb welcher ein Auslesen und eine Auswertung erfolgen soll.

Besonders zweckmäßig ist es dabei, wenn die Anzahl der Ausgänge des Sensorchips der Anzahl der oder einem ganzzahligen Vielfachen der Anzahl der Bildverarbeitungselemente entspricht. Insbesondere dann, wenn die Anzahl der Ausgänge des Sensorchips der Anzahl der Bildverarbeitungselemente entspricht, wird eine optimale Verkürzung der Verarbeitungszeit erreicht. Diese hängt nur noch von den Möglichkeiten des eingesetzten lichtempfindlichen Sensors ab. Zeitverzögerungen aufgrund einer sukzessiven Bearbeitung der parallel ausgelesenen Daten werden vermieden.

Insbesondere bei dem Lichtschnitt-Triangulationsverfahren kommt es nur darauf an, den Verlauf einer Linie zu erfassen. Es ist dabei bekannt, dass sich die Linie im Wesentlichen von einer Seite zur anderen Seite des lichtempfindlichen Sensor erstreckt, wobei der vollständige Verlauf der Linie durch die Datenverarbeitungsanlage anhand nur eines Pixels je Spalte ermittelt werden kann. Es ist daher erforderlich, lediglich ein Pixel in einer Spalte zu bestimmen, auf das mit Sicherheit die Linie abgebildet ist.

Gemäß einer ersten Ausführungsform der Erfindung ist vorgesehen, dass in einem Bildverarbeitungselement die Intensität eines Pixels mit derjenigen eines Vorgängerpixels in derselben Spalte verglichen wird. Dabei werden die Daten des Pixels mit der höchsten oder niedrigsten Intensität einer Spalte gespeichert und am Ende des Auslesens aller Pixel des Sensors ausgegeben. Für diese Bildverarbeitung ist lediglich ein einfacher Komparator erforderlich, der die Intensität des gerade eingelesenen Pixels mit derjenigen des gespeicherten Pixels vergleicht. Sofern das Pixel mit der maximalen Intensität gesucht wird, werden die gespeicherten Daten eines Pixels mit niedrigerer Intensität überschrieben und umgekehrt. Am Ende des Auslesens aller Pixel des Sensors sind die Daten mit der maximalen Intensität gespeichert. Für einen Linienverlauf ist es ausreichend, nur die Positionsdaten des betreffenden Pixels zu speichern. Sofern eine Abbildung der Oberfläche erfolgen soll, kann zudem die Intensität gespeichert werden. Eine Abbildung der Linie mit unterschiedlichen Intensitäten kann erfolgen.

Es kann aber auch vorgesehen werden, dass in einem Bildverarbeitungselement die Intensität eines Pixels mit einem Schwellenwert verglichen wird. Dabei ist es zweckmäßig, wenn die Daten des den Schwellenwert erstmalig überschreitenden und erstmalig unterschreitenden Pixels einer Spalte gespeichert und am Ende des Auslesens aller Pixel des Sensors ausgegeben werden. Hierdurch lässt sich mit einfachen Mitteln ein Bereich begrenzen, innerhalb dessen Pixel über beziehungsweise unter einem Schwellenwert liegen.

Es ist hierbei möglich, dass die Daten eines Pixels ermittelt und ausgegeben werden, das zwischen und vorzugsweise in etwa mittig zwischen den den Schwellenwert erstmalig überschreitenden und erstmalig unterschreitenden Pixel liegt. Auch damit ist es mit einfachen Mitteln möglich, die Position der Pixel zu ermitteln, auf die die Linie abgebildet wird.

Je nach Umfang der Datenverarbeitung innerhalb der Bildverarbeitungselemente kann die Verarbeitung in einem Schritt erfolgen. Sofern mehrere Schritte erforderlich sind, ist es zweckmäßig, wenn die Bildverarbeitungselemente eine minimal zweistufige Pipeline-Architektur aufweisen. Damit werden schrittweise die parallel ausgegebenen Daten entsprechend der Taktfrequenz bearbeitet, ohne dass es zu Zeitverzögerungen kommt.

Insgesamt wird durch dieses Verfahren erreicht, dass die Menge der zu übertragenden Daten drastisch reduziert wird. Im optimalen Fall werden beispielsweise bei einem Sensor mit 1.024 x 1.024 Pixeln und über 1 Million Pixeldaten lediglich die Positionsdaten und gegebenenfalls die Intensitätsdaten von nur 1.024 Pixeln übermittelt. Die Datenverarbeitungsanlage ist in der Lage, aus den Positionen der Pixel den Verlauf der Linie beispielsweise für das Lichtschnitt-Triangulationsverfahren ohne Weiteres zu ermitteln. Es liegt auf der Hand, dass mit diesem Verfahren eine wesentlich höhere Bildverarbeitungsfrequenz erfolgen kann.

Die Erfindung betrifft auch eine Bildverarbeitungseinheit insbesondere zur Durchführung des oben erläuterten Verfahrens. Die Bildverarbeitungseinheit umfasst wenigstens zwei und vorzugsweise mehrere Bildverarbeitungselemente, deren Eingänge mit den Ausgängen des lichtempfindlichen Sensors verbunden sind. Dabei sind die Bildverarbeitungselemente so geschaltet, dass in denselben Bildverarbeitungselementen jeweils die Pixeldaten derselben Spalten verarbeitet werden. Es ist jedem Bildverarbeitungselement wenigstens ein Speicherelement zugeordnet, in dem zumindest die Daten des oder der Pixel speicherbar sind, durch die ein Linien- oder Bereichsabschnitt in einer Spalte definierbar ist. Jedes Bildverarbeitungselement umfasst einen Bilddatenausgang, um am Ende des Auslesens der Daten aller Pixel des Sensors die gespeicherten Daten des oder der Pixel der Spalten auszugeben. In vorteilhafter Weise sind die Bildverarbeitungselemente gleichartig ausgebildet. Besonders zweckmäßig ist es dabei, wenn die Bildverarbeitungselemente in einem frei programmierbaren Logikbaustein integriert sind. Derartige Logikbausteine, beispielsweise FPGA (field programmable gate array) sind allgemein bekannt und bedürfen an dieser Stelle keiner weiteren Erläuterung. Insbesondere ist es möglich, hierauf mehrere parallel arbeitende Bildverabreitungselemente zu implementieren.

Aufgrund der Tatsache, dass nur eine geringe Anzahl von Daten gespeichert werden muss, braucht das Speicherelement nur eine geringe Kapazität aufzuweisen. Es kann ausreichend sein, wenn die Anzahl von Speicherplätzen zumindest der Anzahl der Pixel entspricht, auf die die zu erfassende Linie oder der zu erfassende Bereich auf dem Sensor abgebildet wird. Insbesondere bei dem Lichtschnitt-Triangulationsverfahren sind die Anzahl der charakterisierenden Pixel zumindest näherungsweise vorbekannt, so dass die Speicherelemente entsprechend dimensioniert werden können.

Zur Erfassung einer Linie mittels der maximalen beziehungsweise minimalen Intensität ist es ausreichend, wenn das Speicherelement einen Speicherplatz je in dem zugeordneten Bildverarbeitungselement verarbeitete Spalte aufweist. Sofern die Daten derjenigen Pixel abgespeichert werden, bei denen ein Schwellenwert erstmalig überbeziehungsweise unterschritten wird, werden zwei Speicherplätze je in dem zugeordneten Bildverarbeitungselement verarbeitete Spalte benötigt. Sofern zusätzlich noch die Intensität des betreffenden Pixels erfasst werden muss, wird ein weiterer Speicherplatz benötigt. Das selektive Überschreiben oder Verwerfen des gerade eingelesenen Pixels kann beispielsweise über einen Multiplexer erfolgen.

Die Bildverarbeitungselemente sind vorzugsweise Bestandteile einer einzigen Bildverarbeitungseinheit, die den Sensor unmittelbar oder mittels eines A/D-Wandlers nachgeschaltet ist. Damit werden Datenübertragungswege vermieden. Die Ausgänge der Bildverarbeitungselemente können in einem standardisierten Datenausgang implementiert sein. Damit wird erreicht, dass der entsprechend ausgerüstete Detektor unmittelbar an eine Datenverarbeitungsanlage für übliche Bildverarbeitungsprogramme anschließbar ist.

Die Erfindung wird im Folgenden anhand der schematischen Zeichnung näher erläutert. Es zeigen:
- Fig. 1: einen Ausschnitt eines lichtempfindlichen Sensors mit der Zuordnung zu den einzelnen Bildverarbeitungselementen gemäß der Erfindung,
- Fig. 2: den schematischen Aufbau eines Detektors mit einer Bildverarbeitungseinheit gemäß der Erfindung und
- Fig. 3: den schematischen Aufbau eines Bildverarbeitungselements gemäß der Erfindung.

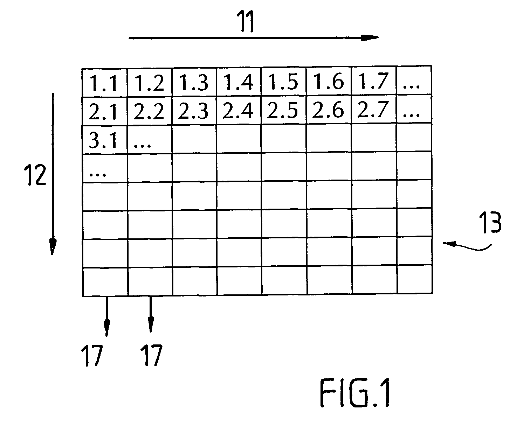

In Figur 1 ist ein Ausschnitt eines matrixförmigen lichtempfindlichen Sensors dargestellt. Es sind mehrere Pixel erkennbar, die in mehreren Spalten in Richtung des Pfeils 11 und in mehreren Zeilen in Richtung des Pfeils 12 angeordnet sind und auf denen beispielsweise eine Linie abgebildet werden kann. Bei solchen lichtempfindlichen Sensoren unterscheidet man zwischen einer schnellen Ausleserichtung, bei dem gezeigten Ausführungsbeispiel entlang einer Zeile, und einer langsamen Ausleserichtung, bei dem gezeigten Ausführungsbeispiel entlang einer Spalte. Bei dem gezeigten lichtempfindlichen Sensor sind zwei parallele Ausgänge vorgesehen mit der Folge, dass stets zwei benachbarte Pixel gleichzeitig ausgelesen werden können. Im Einzelnen werden demnach pro Zyklus zunächst die Daten der Pixel 1.1 und 1.2, danach die Daten der Pixel 1.3 und 1.4 und so weiter bis zur nächsten Zeile ausgelesen. Dann beginnt das Auslesen der ersten beiden Pixel 2.1 und 2.2 der zweiten Zeile.

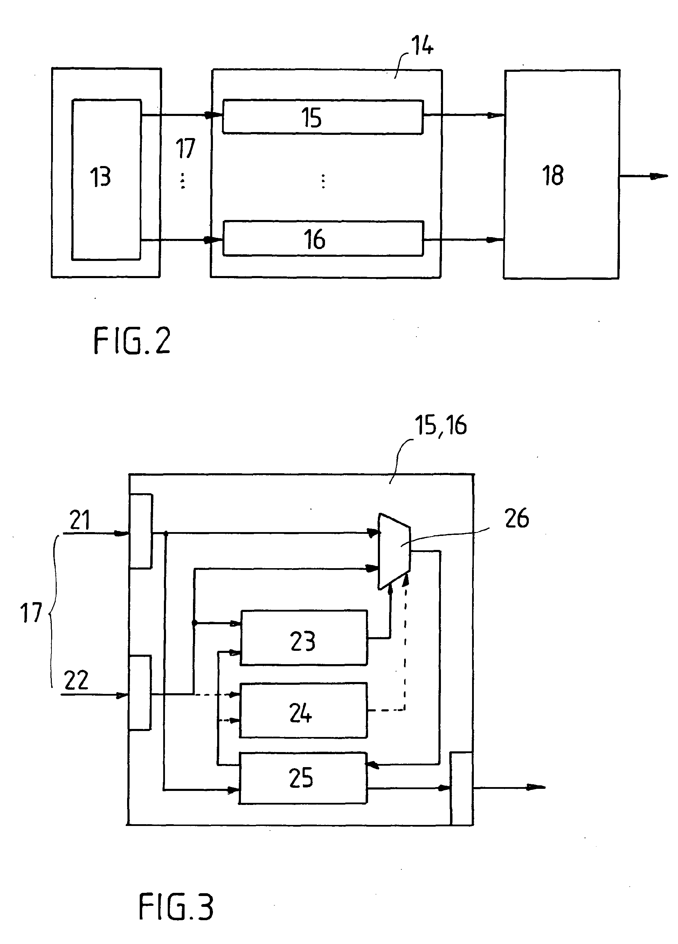

Der Detektor beispielsweise für die Realisierung des Lichtschnitt-Triangulationsverfahrens umfasst gemäß Figur 2 einen lichtempfindlichen Sensor 13, wie er beispielsweise in Figur 1 gezeigt ist. Es ist ferner eine Bildverarbeitungseinheit 14 vorgesehen, die eine Vielzahl von Bildverarbeitungselementen 15, 16 aufweist. Im Einzelnen ist die Anordnung so getroffen, dass die Bildverarbeitungseinheit 14 eine Anzahl von Bildverarbeitungselementen 15, 16 aufweist, die der Anzahl der parallelen Ausgänge des lichtempfindlichen Sensors 13 entspricht. Bei dem gezeigten Ausführungsbeispiel besitzt der lichtempfindliche Sensor 13 zwei parallele Ausgänge 17, die mit zwei Bildverarbeitungselementen 15 verbunden sind. Die Schaltung ist dabei so ausgebildet, dass in einem Bildverarbeitungselement 15 stets die Pixel einer Spalte, also die Pixel in der langsamen Ausleserichtung, bearbeitet werden. Bei dem gezeigten Ausführungsbeispiel bedeutet dies, dass in dem Bildverarbeitungselement 15 die Daten der Pixel 1.1, 1.3, 1.5... der ersten Zeile und anschließend die Daten der Pixel 2.1, 2.3, 2.5... der zweiten Zeile und so weiter verarbeitet werden. Dadurch wird erreicht, dass eine vollständige Spalte in demselben Bildverarbeitungselement verarbeitet wird. Entsprechendes gilt für das Bildverarbeitungselement 17, in dem die Daten der Pixel 1.2, 1.4, 1.6 ... und anschließend die Daten der Pixel 2.2, 2.4, 2.6 ... und so weiter verarbeitet werden.

Die Bildverarbeitungseinheit 14 ist zudem mit einer Bilddatenausgangseinheit 18 verbunden, die die letztendlich ausgegebenen Daten zu einer nicht dargestellten Datenverarbeitungsanlage überträgt.

Die einzelnen Bildverarbeitungselemente 15, 16 sind grundsätzlich gleichartig ausgebildet oder führen zumindest die gleichen Verarbeitungsschritte durch. Wie in Figur 3 dargestellt, kann ein Bildverarbeitungselement einen Eingang 22 für Intensitätsdaten und einen Eingang 21 für die Pixelkoordinaten aufweisen. Die betreffenden Daten werden wenigstens einer Linienerkennungslogik 23, 24 zugeführt. Die Linienerkennungslogik 23, 24 umfasst einen Komparator, um beispielsweise die Intensität eines Pixels mit der Intensität eines vorhergehenden Pixels zu vergleichen. Alternativ oder zusätzlich kann vorgesehen werden, dass die Linienerkennungslogik 24 die Intensität eines Pixels mit einem Schwellenwert vergleicht. Dies ist in der Zeichnung gestrichelt dargestellt.

Weiterhin ist ein Speicherelement 25 vorgesehen, in dem zumindest die Positionsdaten eines Pixels vorzugsweise aber zusätzlich die Intensitätsdaten eines Pixels speicherbar sind. In diesem Speicherelement werden die Daten derjenigen Pixel beziehungsweise desjenigen Pixels gespeichert, die eine Linie oder einen zu erfassenden Bereich kennzeichnen.

Es kann beispielsweise vorgesehen werden, dass mit der Linienerkennungslogik 23 das Pixel der maximalen Intensität erfasst wird. Das eingelesene Pixel beziehungsweise dessen Intensität wird mit der Intensität des im Speicherelement abgelegten Pixels verglichen. Weist das eingelesene Pixel eine höhere Intensität auf, werden die Daten des vorherigen Pixels mit den Daten des aktuellen Pixels überschrieben. Dazu ist ein Multiplexer 26 vorgesehen. Bleibt die Intensität des eingelesenen Pixels unterhalb der Intensität des vorhergehenden Pixels werden die eingelesenen Daten verworfen.

Es kann aber auch vorgesehen werden, dass beispielsweise in der Linienerkennungslogik 24 die Intensität eines Pixels mit einem Schwellenwert verglichen wird. Hier ist vorgesehen, dass in dem Speicherelement 25 die Daten des Pixels abgespeichert werden, bei welchem der Schwellenwert erstmalig unter- beziehungsweise überschritten wird. Im weiteren Verlauf der Verarbeitung der Pixel derselben Spalte werden die Daten desjenigen Pixels gespeichert, dessen Intensität den Schwellenwert erstmalig wieder unter- beziehungsweise überschreitet. Aus diesen beiden Pixeln lässt sich der betreffende Linienabschnitt, der in dieser Spalte abgebildet wird, beispielsweise durch das mittig dazwischenliegende Pixel ermitteln. Hier werden zwei Speicherplätze in dem Speicherelement benötigt. Wenn zudem die Intensität zu erfassen ist, wird bei beiden Linienerkennungslogiken 23, 24 ein zusätzlicher Speicherplatz im Speicherelement benötigt.

Am Ende des Auslesens der Daten aller Pixels des Sensors werden von der Bilddatenausgangseinheit nur die gespeicherten Daten der betreffenden Pixel aus den Speicherelementen der einzelnen Bildverarbeitungselemente ausgelesen und an die Datenverarbeitungsanlage übertragen. Es ist offensichtlich, dass hierdurch die zu übertragende Datenmenge erheblich reduziert werden kann. Weiterhin können die Verarbeitungsschritte in den Linienerkennungslogiken 23, 24 sehr schnell und nahezu in Echtzeit durchgeführt werden. Damit wird durch die Bildverarbeitungseinheit kaum mehr Rechenzeit benötigt. Vielmehr wird die Verarbeitungszeit durch die Auslesezykluszeit des eingesetzten lichtempfindlichen Sensors bestimmt. Wenn zudem vorgesehen ist, dass die Anzahl der Bildverarbeitungselemente einer Bildverarbeitungseinheit der Anzahl der parallelen Ausgänge 16 des lichtempfindlichen Sensors entspricht, kann die Verarbeitungszeit zur Erfassung der relevanten Pixel eine Linie im Lichtschnitt-Triangulationsverfahren in Abhängigkeit des eingesetzten Sensors optimiert werden.

## Patentansprüche

**1.** Verfahren zum Erfassen wenigstens einer Linie oder wenigstens eines Bereichs, die beziehungsweise der auf einem lichtempfindlichen Sensor abgebildet wird, der eine Vielzahl von in einer Matrix mit Zeilen (11) und Spalten (12) angeordneten Pixel, deren Daten zeilenweise ausgegeben werden, und wenigstens zwei und vorzugsweise mehrere parallele Ausgänge aufweist, um taktweise die Pixeldaten mehrerer Pixel einer Zeile parallel auszugeben, **dadurch gekennzeichnet, dass** die parallel ausgegebenen Pixeldaten durch wenigstens zwei und vorzugsweise mehrere Bildverarbeitungselemente (15, 16) parallel verarbeitet werden, dass in denselben Bildverarbeitungselementen (15, 16) jeweils die Pixeldaten derselben Spalten verarbeitet werden, dass in dem Bildverarbeitungselement zumindest die Daten des oder der Pixel gespeichert werden, durch die ein Linien- oder ein Bereichsabschnitt in einer Spalte **gekennzeichnet** ist, und dass am Ende des Auslesens der Daten der Pixel des Sensors die gespeicherten Daten des oder der Pixel der Spalten ausgegeben werden.

**2.** Verfahren nach Anspruch 1, **dadurch gekennzeichnet, dass** die Anzahl der Ausgänge (17) der Anzahl der oder einem ganzzahligen Vielfachen der Anzahl der Bildverarbeitungselemente entspricht.

**3.** Verfahren nach einem der Ansprüche 1 oder 2, **dadurch gekennzeichnet, dass** in einem Bildverarbeitungselement (15, 16) die Positionsdaten und/oder die Intensitätsdaten des oder der Pixel einer Spalte gespeichert werden, durch welche der Linien- oder Bereichsabschnitt **gekennzeichnet** ist.

**4.** Verfahren nach einem der Ansprüche 1 bis 3, **dadurch gekennzeichnet, dass** in einem Bildverarbeitungselement (15, 16) die Intensität eines Pixels mit derjenigen eines Vorgängers in derselben Spalte verglichen wird.

**5.** Verfahren nach Anspruch 4, **dadurch gekennzeichnet, dass** die Daten des Pixels mit der höchsten oder niedrigsten Intensität einer Spalte gespeichert und am Ende des Auslesens aller Pixel des Sensors ausgegeben wird.

**6.** Verfahren nach einem der Ansprüche 1 bis 3, **dadurch gekennzeichnet, dass** in einem Bildverarbeitungselement (15, 16) die Intensität eines Pixels mit einem Schwellenwert verglichen wird.

**7.** Verfahren nach Anspruch 6, **dadurch gekennzeichnet, dass** die Daten des den Schwellenwert erstmalig überschreitenden und erstmalig unterschreitenden Pixels einer Spalte gespeichert am Ende des Auslesens aller Pixel des Sensors ausgegeben werden.

**8.** Verfahren nach Anspruch 7, **dadurch gekennzeichnet, dass** die Daten eines Pixels ermittelt und ausgegeben werden, das zwischen und vorzugsweise in etwa mittige zwischen den den Schwellenwert erstmalig überschreitenden und erstmalig unterschreitenden Pixel liegt.

**9.** Verfahren nach einem der Ansprüche 1 bis 8, **dadurch gekennzeichnet, dass** die gespeicherten Daten eines Pixels in Abhängigkeit vom Vergleichsergebnis von den Daten eines neuen Pixels derselben Spalte überschrieben oder unverändert bleiben.

**10.** Verfahren nach einem der Ansprüche 1 bis 8, **dadurch gekennzeichnet, dass** die Bildverarbeitungselemente (15, 16) gleiche Verarbeitungsschritte umfassen und durchführen.

**11.** Verfahren nach einem der Ansprüche 1 bis 10, **dadurch gekennzeichnet, dass** die Bildverarbeitungselemente eine minimal zweistufige Pipeline-Architektur aufweisen.

**12.** Vorrichtung zum Erfassen wenigstens einer Linie oder eines Bereichs, die beziehungsweise der auf einem lichtempfindlichen Sensor (13) abgebildet wird, der eine Vielzahl von in einer Matrix mit Zeilen (11) und Spalten (12) angeordneten Pixel, deren Daten zeilenweise ausgegeben werden, und wenigstens zwei und vorzugsweise mehrere parallele Ausgänge (17) aufweist, um taktweise die Pixeldaten mehrerer Pixel einer Zeile parallel auszugeben, **dadurch gekennzeichnet, dass** wenigstens zwei und vorzugsweise mehreren Bildverarbeitungselemente (15, 16) vorhanden sind, um die parallel ausgegebenen Pixeldaten parallel verarbeitet werden, dass die Eingänge der Bildverarbeitungselemente so mit den Ausgängen (17) des Sensors verbunden sind, dass in denselben Bildverarbeitungselementen (15, 16) jeweils die Pixeldaten derselben Spalten verarbeitet werden, dass jedem Bildverarbeitungselement wenigstens ein Speicherelement (25) zugeordnet ist, in der zumindest die Daten des oder der Pixel speicherbar sind, durch die ein Linien- oder Bereichsabschnitt in einer Spalte definierbar ist, und dass jedem Bildverarbeitungselement wenigstens einen Bilddatenausgang aufweist, um am Ende des Auslesens der Daten der Pixel des Sensors die gespeicherten Daten des oder der Pixel der Spalten auszugeben.

**13.** Vorrichtung nach Anspruch 12, **dadurch gekennzeichnet, dass** die Anzahl der Ausgänge (17) der Anzahl der oder einem ganzzahligen Vielfachen der Anzahl der Bildverarbeitungselemente (15, 16) entspricht.

**14.** Vorrichtung nach einem der Ansprüche 12 oder 13, **dadurch gekennzeichnet, dass** in einem Bildverarbeitungselement (15, 16) wenigstens ein Komparator (23) integriert ist, der die Intensität eines Pixels mit derjenigen eines Vorgängers in derselben Spalte vergleicht.

**15.** Vorrichtung nach einem der Ansprüche 12 bis 14, **dadurch gekennzeichnet, dass** in einem Bildverarbeitungselement (15, 16) wenigstens ein Komparator (24) integriert ist, der die Intensität eines Pixels mit einem Schwellenwert vergleicht.

**16.** Vorrichtung nach einem der Ansprüche 12 bis 15, **dadurch gekennzeichnet, dass** das Speicherelement (25) eine Anzahl von Speicherplätzen aufweist, zumindest der Anzahl von Pixeln entspricht, auf die die zu erfassende Linie oder der zu erfassende Bereich auf dem Sensor abgebildet wird.

**17.** Vorrichtung nach Anspruch 16, **dadurch gekennzeichnet, dass** das Speicherelement (25) ein bis drei Speicherplätze je in dem zugeordneten Bildverarbeitungselement verarbeitete Spalte aufweist.

**18.** Vorrichtung nach einem der Ansprüche 12 bis 17, **dadurch gekennzeichnet, dass** in einem Bildverarbeitungselement (15, 16) ein Multiplexer (26) integriert ist, der aufgrund des Vergleichergebnisses des Komparators einen Speicherplatz des Speicherelements mit Daten eines neuen Pixels derselben Spalte überschreibt oder die gespeicherten Daten unverändert lässt.

**19.** Vorrichtung nach einem der Ansprüche 12 bis 18, **dadurch gekennzeichnet, dass** die Bildverarbeitungselemente (15, 16) gleich oder gleichwirkend ausgebildet sind.

**20.** Vorrichtung nach einem der Ansprüche 12 bis 19, **dadurch gekennzeichnet, dass** die Bildverarbeitungselemente eine minimal zweistufige Pipeline-Architektur aufweisen.

**22.** Vorrichtung nach einem der Ansprüche 12 bis 21, **dadurch gekennzeichnet, dass** die Bildverarbeitungselemente in einem freiprogrammierbaren Logikbaustein integriert sind.

**23.** Vorrichtung nach einem der Ansprüche 12 bis 23, **dadurch gekennzeichnet, dass** die Bildverarbeitungselemente (15, 16) Bestandteile einer Bildverarbeitungseinheit (14) ist, die dem Sensor unmittelbar oder mittels eines A/D-Wandlers nachgeschaltet ist.
